(19) **Europäisches Patentamt**
**European Patent Office**
**Office européen des brevets**

(11) **EP 4 671 720 A1**

(12) **EUROPEAN PATENT APPLICATION**
published in accordance with Art. 153(4) EPC

(43) Date of publication:
**31.12.2025   Bulletin 2026/01**

(51) International Patent Classification (IPC):
*G01L 25/00* (2006.01)    *G01L 5/16* (2020.01)
*G01L 5/00* (2006.01)    *G06F 17/10* (2006.01)

(21) Application number: **24760644.5**

(22) Date of filing: **15.02.2024**

(86) International application number:
**PCT/KR2024/095234**

(87) International publication number:
**WO 2024/177456 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.02.2023   KR 20230022008**

(71) Applicant: **Kyungpook National University
Industry-Academic
Cooperation Foundation
Daegu 41566 (KR)**

(72) Inventor: **KIM, Min Young
Daegu 42081 (KR)**

(74) Representative: **Jung, Minkyu
Wuesthoff & Wuesthoff
Patentanwälte und Rechtsanwalt PartG mbB
Schweigerstraße 2
81541 München (DE)**

(54) **METHOD FOR CALIBRATING MULTI-AXIS FORCE TORQUE SENSOR, AND APPARATUS THEREFOR**

(57)    The present invention relates to a method for calibrating a sensor of a multi-axis force/torque sensor which has a maximum of *n* axes, measures a force in a vertical direction on the *n/2* axes, and measures a torque in a horizontal direction on the *n/2* axes, and more particularly, to a method for calibrating a sensor of the multi-axis force/torque sensor which comprises: a first step of preparing test reference data of the multi-axis force/torque sensor; a second step of obtaining sensor output values measured on the n axes provided in the multi-axis force/torque sensor by using the test reference data prepared in the first step as an input value; a third step of calculating a linear relationship between an input value and a sensor output value on each axis for a force and a torque by using the sensor output values obtained in the second step; and a fourth step of calculating an input value corresponding to the sensor output value obtained in the second step based on the linear relationship calculated in the third step, to calculate a correlation equation for a correlation between each axis.

[FIG. 3]

EP 4 671 720 A1

## Description

## Technical Field

The present invention relates to a method for calibrating a multi-axis force/torque sensor and an apparatus according to the same, and more particularly, to a method for calibrating a multi-axis force/torque sensor and an apparatus according to the same, wherein the multi-axis force/torque sensor is designed to ensure linearity with respect to each axis, but in practice, linearity of each axis is not independent, and thus the independence of each axis is ensured through matrix modification and optimization of the multi-axis calibration matrix using an input/output matrix equation.

## Background technique

In general, with the development of technology, robots have an increasingly similar structure to humans and are able to imitate human movements. One of the most important things in making the robot as described above is to execute the desired operation by distributing accurate force to the robot according to the situation.

In order to accurately distribute the force to the robot, a force/torque sensor, also known as a force sensor, has been developed due to the need to precisely measure the force/torque applied between the frames of the robot, and additionally, a multi-axis force/torque sensor that simultaneously measures the force in multiple axes has been developed.

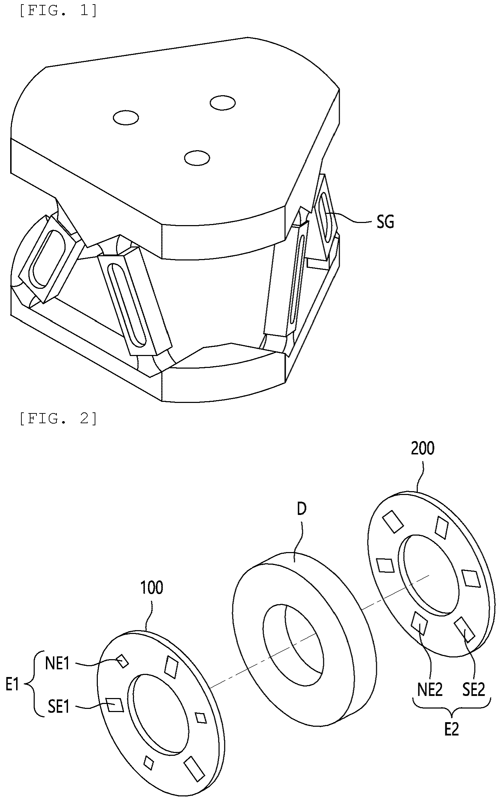

FIG. 1 is a diagram illustrating a conventional resistive force/torque sensor, and as illustrated, the resistive force/torque sensor is configured in a form in which a three-dimensional structure is formed and several strain gages (SGs) are attached to the structure. When an external force is applied to the structure of the resistance type force/torque sensor as described above, the length of the strain gage changes, and a resistance value that changes in proportion to it is measured and calculated as a force or torque value.

In addition to the resistance type force/torque sensor described above, a spring type force/torque sensor has also been proposed. A spring-type force/torque sensor is a device that forms a structure having a spring, measures the displacement of the spring that changes when an external force is applied to the structure, and converts it into force or torque.

Since such existing sensors require a complex three-dimensional structure, it is difficult to make the sensor small and thin, and there is a problem in that it is difficult to apply it to a part with spatial constraints. In addition, since high technology is required for processing a structure, attaching a gage, and calibrating a measurement value, there is a problem in that the price of a sensor becomes expensive, and commercialization has been difficult due to the above problems.

Korean Patent No. 10-1470160 (Title of Invention: Flat Type Force/Torque Sensor) shown in FIG. 2 to which a representative technology proposed to solve the above problems is attached, the flat type force/torque sensor includes a first substrate 100 including N (N is a natural number) first electrodes E1, a second substrate 200 including N second electrodes E2 facing the first electrodes, and a dielectric D positioned between the first substrate and the second substrate.

In addition, the first substrate 100 and the second substrate 200 are made of a PCB substrate, and the first electrode E1 and the second electrode E2 are formed on the surface of the PCB substrate in contact with the dielectric, so that the electrodes are in close contact with the dielectric when the dielectric and each substrate are coupled, and the first electrode E1 and the second electrode E2 facing each other, and the dielectric D positioned between the first electrode and the second electrode facing each other form N sensor cells.

The sensor cells formed as described above are divided into NFSC (Normal Force Sensor Cell, NE1, NE2) for measuring a force in the vertical direction and SFSC (Shear Force Sensor Cell, SE1, SE2) for measuring a force in the horizontal direction.

In addition, the normal force sensor cells NFSC and the shear force sensor cells SFSC are formed in half in each of the N sensor cells, and each of the sensor cells is alternately positioned on the outer circumferential surfaces of the circular plate-shaped dielectric D and the substrates 100 and 200.

In this case, a sensor value regarding a force is detected by the NFSC (Normal Force Sensor Cell, NE1, NE2), and a sensor value regarding a torque is detected by the SFSC(Shear Force Sensor Cell, SE1, SE2).

The multi-axis force/torque sensor(FT sensor) illustrated in FIG. 1 or FIG. 2 described above does not have a problem in itself, and there is a difference in use of the multi-axis force/torque sensor, and in order to perform robotic control by actually using the multi-axis force/torque sensor, an essential process called sensor calibration must be carried out.

This is because the cell data value of the sensor cell constituting the multi-axis force/torque sensor does not have the same value as the actual physical quantity, and thus when the value of the cell data treated as equal to the actual physical quantity, precise control of the robotics becomes impossible.

Therefore, the process of determining the correspondence between the value measured by the multi-axis force/torque sensor and the actual physical quantity is necessary, and this is the process of calibrating the sensor.

When the sensor calibration is performed, the cell data of the reference multi-axis force/torque sensor providing the reference data value is used, and since the cell data of the calibrated multi-axis force/torque sensor, which is the force sensor performing the calibration, and the cell data of the reference multi-axis force/torque sensor do not have a linear distribution, the calibration was performed using only a local portion having linearity in the related art, and thus the range of data measurable by the sensor is limited, and it is difficult to secure the accuracy of the measured value.

In addition, as shown in FIGS. 1 and 2, the multi-axis force/torque sensor is a sensor having a maximum 6-axis degree of freedom of output according to each axis and each torque direction in a 3D space, and although a method of calibrating each axis in order to solve the above-described problem is well known, as described above, force torque sensing data output from the maximum 6-axis has a correlation that affects each other.

Therefore, since the conventional sensor calibration method for calibrating only each axis of the maximum 6 axes does not take into account the signal correlation of the multi-axis force/torque sensor having the maximum 6-axis degree of freedom of output, it is difficult to meet the demands of the robotic control site requiring precise control.

[Prior Art Literature]

[Patent document]

(Patent Document 01) Publication No. 10-2008-0039624
(Patent Document 02) Registered Patent 10-1470160

## Detailed Description of the Invention

### Technical Problem

The present invention has been made in an effort to provide a method for calibrating a multi-axis force/torque sensor, and more particularly, to a method for calibrating a multi-axis force/torque sensor and an apparatus therefor, wherein the multi-axis force/torque sensor is designed to ensure linearity with respect to each axis, but in practice, the linearity of the each axis is not independent, and thus the independence of the each axis is guaranteed through matrix modification and optimization of the multi-axis calibration matrix using an input/output matrix equation.

### Technical Solution

In order to achieve the above-described object, a method for calibrating a multi-axis force/torque sensor according to the present invention, which has a maximum of $n$ axes, measures forces in a vertical direction on the $n/2$ axes, and measures torques in a horizontal direction on the $n/2$ axes, includes: a first step of preparing reference data for testing of the multi-axis force/torque sensor; a second step of obtaining sensor output values measured on the $n$ axes provided in the multi-axis force/torque sensor by using the reference data for testing prepared in the first step as an input value; a third step of calculating a linear relationship between input values and sensor output values on each axis for forces and torques by using the sensor output values obtained in the second step; and a fourth step of calculating an input value corresponding to the sensor output values obtained in the second step based on the linear relationship calculated in the third step, and then calculating a correlation equation according to a correlation between each axis.

In order to achieve the above object, the method for calibrating the multi-axis force/torque sensor according to the present invention further includes a fifth process of determining reliability by calculating an integrated calibration value according to a matrix vector for integrated calibration of correlations between respective axes based on the correlation matrix calculated through the fourth process.

As an additional feature of the calibration method of a multi-axis force/torque sensor according to the present invention for achieving the aforementioned purpose, the third process is to generate $n$ linear functions using a linear regression method based on the minimization of a square error for each of the n axes.

As an additional feature of the calibration method of a multi-axis force/torque sensor according to the present invention for achieving the aforementioned purpose, the function according to the linear relationship is a function of $y = ax + b$, $x$ is an input value of force or torque applied to each axis, $y$ is an output value of each sensor according to the input value, the slope ($a$) is calculated by $a = \dfrac{n\sum(x_i y_i) - \sum x_i \sum y_i}{n\sum(x_i)^2 - (\sum x_i)^2}$, and the intercept ($b$) is calculated by $b = \bar{y} - a \cdot \bar{x}$.

As an additional feature of the calibration method of a multi-axis force/torque sensor according to the present invention for achieving the aforementioned purpose, the method comprises: a first step of storing the sensor output values $y_i$ of all axes after applying $x_i$ to each axis being tested; a second step of generating and storing an estimated value $x'_i$ of $x_i$ by

using a function based on the linear relationship derived in the third process from all the output values $y_i$ of the axes; a third step of defining, when the estimated values $x'_i$ are generated for each axis of the multi-axis force/torque sensor through the second step, an estimated value vector $X' = [x'_1, x'_2, \cdots, x'_n]$ and a true value vector of calibration values $Z' = [x_1, x_2, \cdots x_n]$; and a fourth step of implementing an integrated calibration matrix equation $Z = RX' + P$ based on the estimated value vector $X'$ and the true value vector $Z$ defined through the third step.

As an additional feature of the calibration method of a multi-axis force/torque sensor according to the present invention for achieving the aforementioned purpose, when the integrated calibration matrix equation is in the form of $Z = RX' + P$, if for each data pair the vectors $Z$ and $X'$ are defined such that the vectors corresponding to data pair $j$ are $Z_j$ and $X'_j$, then when there are $n$ data pairs, the vectors $Z_1$ through $Z_n$ and $X'_1$ through $X'_n$ exist. A first step comprises newly defining $[X', 1]$ as $\hat{X}$ and rearranging the integrated calibration matrix equation $Z = RX' + P$ into the form $Z = [R \, P] * \hat{X} = U * \hat{X}$. A second step comprises reorganizing the calibration matrix equation obtained in the first step such that the matrices of $Z_1$ through $Z_n$ and the newly defined $\hat{X}$ are arranged as $T = [Z_1, Z_2 \cdots Z_n]$ and $Q = \begin{bmatrix} \widehat{X_1}, \widehat{X_2} \cdots \widehat{X_n} \end{bmatrix}$, and finally converting it into $T = U * Q$. A third step comprises, from the calibration matrix equation converted in the second step, defining and arranging $U = [R \, P]$, and obtaining the correlation coefficient $R$ and the correlation constant $P$ through the relation $U = TQ' \times (QQ')^{-1}$.

As an additional feature of the calibration method of a multi-axis force/torque sensor according to the present invention for achieving the aforementioned purpose, the fifth process may further include a first step of calculating the vector $X' = [x'_1, x'_2, \cdots, x'_n]$ of the estimated value using the sensor output information generated from all measured axes of the multi-axis force/torque sensor and the linear regression function calculated through the third process; a second step of calculating the integrated calibration matrix vector $Z = [x_1, x_2, \cdots, x_n]$ from the calibration matrix formula $Z = RX' + P$ calculated through the fourth process based on the vector $X' = [x'_1, x'_2, \cdots, x'_n]$ of the estimated value calculated through the first step; and a third step of reading whether the multi-axis force/torque sensor is corrected or not based on the integrated calibration value $Z = [x_1, x_2, \cdots, x_n]$ calculated through the second step.

As a feature of the calibration apparatus for a multi-axis force/torque sensor according to the present invention for achieving the aforementioned purpose, in a sensor calibration apparatus for a multi-axis force/torque sensor having up to n axes, configured such that n/2 axes measure force in the vertical direction and n/2 axes measure torque in the horizontal direction, the apparatus comprises: a test reference data DB storing test data for testing the multi-axis force/torque sensor; a test pressurizing unit for applying force or torque to each axis of the multi-axis force/torque sensor corresponding to the data values provided by the test reference data DB; a multi-axis sensor value detection and storage unit for individually detecting and storing, for each axis, the sensor values output from the multi-axis force/torque sensor in response to the force or torque applied by the test pressurizing unit; a multi-axis linear function generation unit for calculating the linear relationship between input values of force and torque and the sensor values on each axis by using the sensor values stored in the multi-axis sensor value detection and storage unit; and an inter-axis correlation matrix generation unit for calculating a correlation matrix equation according to the correlation between axes by first calculating the input values corresponding to the sensor output values acquired through the multi-axis sensor value detection and storage unit based on the linear function derived by the multi-axis linear function generation unit, and then comparing the calculated input values with the actual input values generated from the test reference data DB.

In order to achieve the above object, the apparatus for calibrating a multi-axis force/torque sensor according to the present invention further includes an inter-axis correlation matrix equation reliability checking unit for determining reliability by calculating an integrated calibration value according to a matrix vector for integrally calibrating the correlation between each axis based on the correlation matrix equation calculated through the inter-axis correlation matrix equation generating unit.

In order to achieve the above object, the multi-axis linear function generation unit generates $n$ linear functions for each of the $n$ axes using a linear regression method based on the minimization of a square error; the function according to the linear relationship is a function of $y = ax + b$; $x$ is an input value of a force or torque applied to each axis, y is an output value of each sensor according to the input value, the slope ($a$) is calculated by $a = \dfrac{n \sum(x_i y_i) - \sum x_i \sum y_i}{n \sum(x_i)^2 - (\sum x_i)^2}$, and the intercept (b) is calculated by $b = \overline{y} - a \cdot \overline{x}$ the input value.

As an additional feature of the calibration apparatus for a multi-axis force/torque sensor according to the present invention for achieving the aforementioned purpose, the inter-axis correlation matrix generation unit stores the sensor output values $y_i$ of all axes after applying $x_i$ to each axis under test, and then generates and stores an estimated value x'i of xi by using a function based on the linear relationship derived in the third process from all the output values $y_i$ of the axes. When the estimated values $x'_i$ are generated for each axis of the multi-axis force/torque sensor through the second step, an estimated value vector $X' = [x'_1, x'_2, \cdots, x'_n]$ and a true value vector of calibration values $Z = [x_1, x_2, \ldots, x_n]$ are defined. Based on the defined estimated value vector $X'$ and the true value vector $Z$, an integrated calibration matrix equation $Z = RX' + P$ is implemented.

In order to achieve the above-described object, when the integrated calibration matrix is a $Z = RX' + P$-shaped matrix equation, when $Z$ and $X'$ vectors existing in each pair of data are defined as vectors $Z_j$ and $X'_j$ matching the data pair $j$, if there are $n$ data pairs, $Z_1$ to $Z_n$ and $X'_1$ to $X'_n$ vectors exist, and $[X',1]$ is newly defined as $\hat{X}$ to arrange the integrated calibration matrix $Z = RX' + P$ as $Z = [R\,P] * \hat{X} = U * \hat{X}$, and the arranged calibration matrix is further organized such that the matrices of $Z_1$ to $Z_n$ and the newly defined $\hat{X}$ are expressed as $T = [Z_1, Z_2 \cdots Z_n]$ and $Q = \begin{bmatrix} \widehat{X_1}, \widehat{X_2} & \cdots & \widehat{X_n} \end{bmatrix}$, and finally converted into $T = U * Q$. Then, in the calibration matrix equation converted as above, by defining and arranging $U = [R\,P]$, the correlation coefficient $R$ and the correlation constant $P$ are obtained through the relation $U = TQ' \times (QQ')^{-1}$.

As an additional feature of the calibration apparatus for a multi-axis force/torque sensor according to the present invention for achieving the aforementioned purpose, the inter-axis correlation matrix reliability inspection unit calculates an estimated value vector $X' = [x'_1, x'_2, \cdots, x'_n]$ by using the sensor output information generated from all axes measured by the multi-axis force/torque sensor together with the linear regression function derived through the third process. Based on the calculated estimated value vector $X' = [x'_1, x'_2, \cdots, x'_n]$, an integrated calibration matrix vector $Z = [x_1, x_2, \cdots, x_n]$ is calculated from the calibration matrix equation $Z = RX' + P$, and based on the calculated integrated calibration value $Z = [x_1, x_2, \cdots, x_n]$, the reliability of the calibration of the multi-axis force/torque sensor is determined.

**Advantageous Effect**

According to the present invention, the multi-axis force/torque sensor is designed to ensure linearity with respect to each axis, but since linearity of each axis is not actually independent, the multi-axis force/torque sensor has an effect of ensuring the independence of each axis through the matrix equation and optimization of the multi-axis calibration matrix using the input/output matrix equation.

**Description of Drawings**

FIG. 1 is an exemplary view of a conventional resistive force/torque sensor
FIG. 2 is an exploded perspective view of a conventional planar force/torque sensor
FIG. 3 is a block diagram of an apparatus for applying a calibration method of a multi-axis force/torque sensor according to the present invention
FIG. 4 is a schematic flowchart for explaining a method of calibrating a multi-axis force/torque sensor according to the present invention
FIG. 5 is an exemplary diagram for explaining a linear regression method used in the present invention
FIGS. 6 and 7 are detailed flow diagrams of a calibration process of the multi-axis force/torque sensor according to the present invention shown in FIG. 4

**Mode for Invention**

Hereinafter, a calibration method of a multi-axis force/torque sensor according to the present invention and a device thereof will be described with reference to the accompanying drawings.

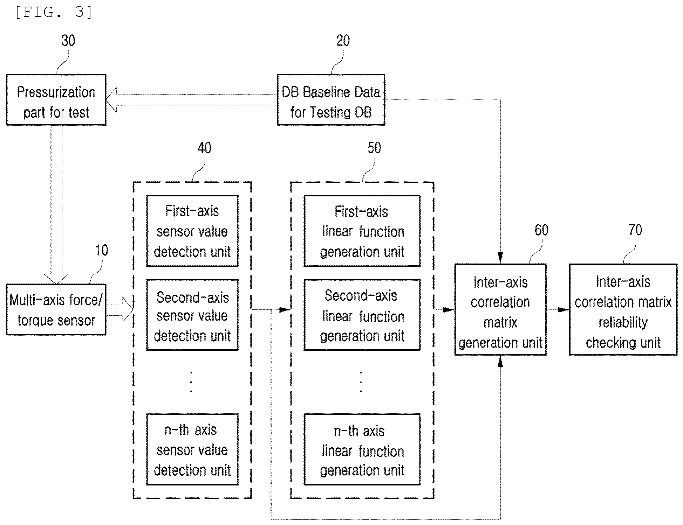

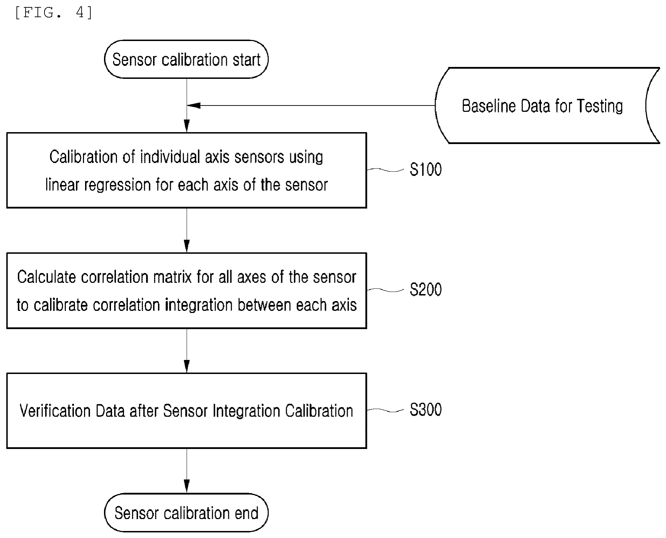

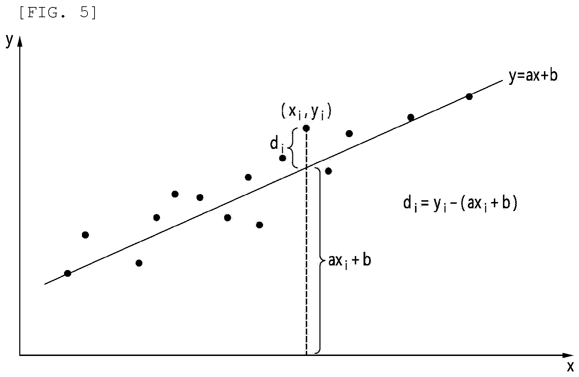

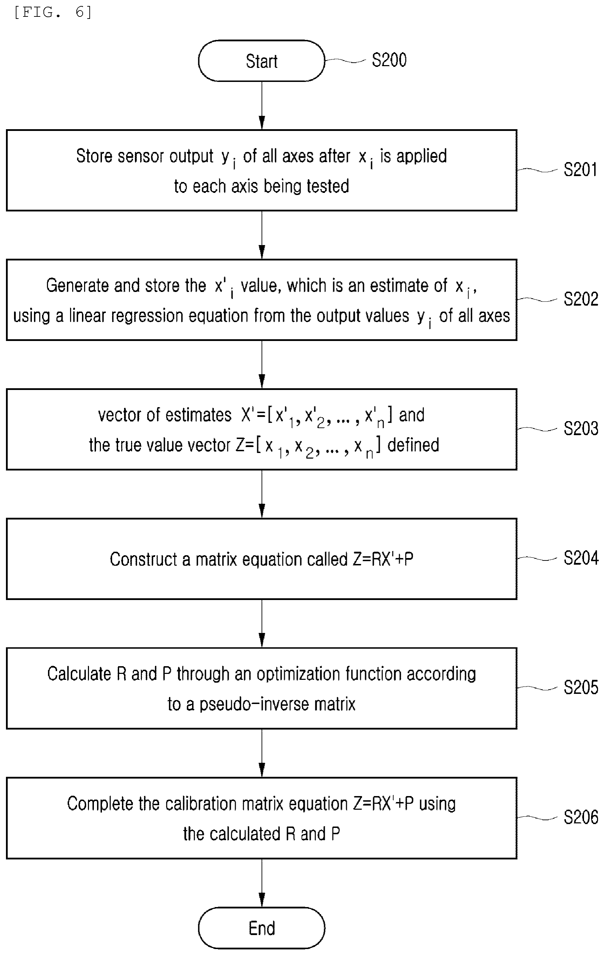

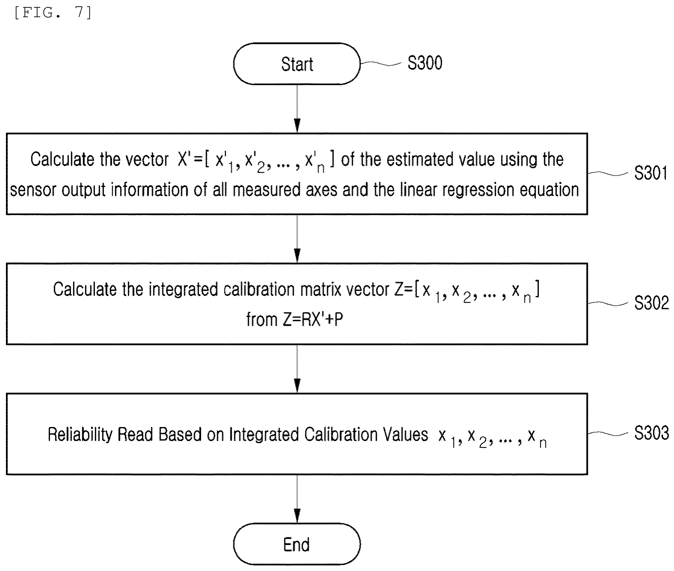

FIG. 3 is a block diagram of an apparatus for applying a method of calibrating a multi-axis force/torque sensor according to the present invention, FIG. 4 is a schematic flowchart for explaining a method of calibrating a multi-axis force/torque sensor according to the present invention, FIG. 5 is an example diagram for explaining a linear regression method used in the present invention, and FIGS. 6 and 7 are detailed flow diagrams of a calibration process of a multi-axis force/torque sensor according to the present invention shown in FIG. 4.

As illustrated in FIG. 3, the apparatus for calibrating a multi-axis force/torque sensor according to the present invention includes a reference data DB 20 for testing, which stores data for testing the multi-axis force/torque sensor, assuming that the multi-axis force/torque sensor 10 has a maximum of n axes, measures forces in a vertical direction on the $n/2$ axes, and measures torque in a horizontal direction on the $n/2$ axes, a pressurization unit 30 for testing, which applies forces or torques to each axis of the multi-axis force/torque sensor 10 in response to a data value provided from the reference data DB 20 for testing, a multi-axis sensor value detection storage unit 40 for individually detecting and storing sensor values output from the multi-axis force/torque sensor 10 according to the forces or torques applied by the pressurization unit 30 for testing The present invention comprises: a multi-axis linear function generation unit (50) for calculating a linear relationship between a sensor value and an input value on each axis for force and torque by using stored sensor values; an inter-axis correlation matrix generation unit (60) for calculating an input value corresponding to a sensor output value obtained through the multi-axis sensor value detection storage unit (40) on the basis of the linear function calculated by the multi-axis linear function generation unit (50), and then comparing the calculated input value with an actual input value generated by the test reference data (DB) (20) to calculate a correlation matrix according to a correlation between each axis; and an inter-axis correlation matrix reliability checking unit (70) for calculating an integrated calibration value according to a matrix for integrally calibrating the correlation between each axis on the basis of the correlation matrix calculated by the inter-axis correlation matrix generation unit to determine reliability.

Referring to the operation of the apparatus for calibrating the multi-axis force/torque sensor according to the present invention, that is, the calibration method, as illustrated in FIG. 4, the method for calibrating the multi-axis force/torque sensor according to the present invention uses the test reference data for each axis constituting the multi-axis force/torque sensor as an input value in the process of step S100 to generate y = ax + b, which is a linear function using linear regression, and calibrates each individual axis sensor through the generated linear regression function.

In this case, assuming that the multi-axis force/torque sensor illustrated in FIG. 2 is used, the multi-axis force/torque sensor performs calibration on the sensor values of the three force sensors and the three torque sensors, and obtains a total of six linear regression functions corresponding to the sensor values, respectively.

Thereafter, in step S200, an input value corresponding to the sensor output value is calculated based on the linear relationship calculated through the step S100, the calculated input value is compared with the actual input value, a correlation matrix according to the correlation between each axis is calculated, and the correlation between each axis is integrated and calibrated based on the correlation matrix.

Substantially, the calibration method for securing the independence of the output linearity of the multi-axis force/torque sensor according to the present invention may include the process of step S100 and the process of step S200, and the process of step S300 is a verification process for the calibration method for securing the independence of the output linearity of the multi-axis force/torque sensor according to the present invention described above.

Referring to FIG. 5, in which the process of obtaining the linear regression function calculated in the process of step S100 is attached, the points expressed in FIG. 5 represent (*x, y*) ordered pairs for the output value *y* for the input value *x*, and the purpose of the linear regression method is to obtain *y = ax + b*, which is a linear function representing each point.

In this case, the linear equation *y = ax + b* is a straight line in the xy plane, *a* and b are constants, and *x* and *y are* real numbers.

It is important to note that when each point forms a single formula, a reasonable straight line is created for each point so that the deviation is minimized. This is called a linear regression method based on 'minimization of square error' (hereinafter referred to as the least squares method).

As shown in the accompanying FIG. 5, the least squares method is a method of defining vertical deviations of points *x* and *y* that are ordered pairs and obtaining straight line *y = ax + b* so that the sum thereof is minimized, and the slope *a* and the intercept *b* are determined according to this method.

Looking at the basic rules for obtaining a straight line through the least squares method, for the straight line to be finally obtained, the deviation between the straight line and points is minimized to obtain one straight line representing the data obtained from the experiment.

The 'only solution,' or a single equation, can be obtained if the sum of squares is used to calculate the error of the data.

Therefore, when the vertical deviation (*e$_i$*: the same as *d$_i$* in the attached FIG. 5) and the total sum *S* of the vertical deviation are defined as an equation, it may be summarized as Equation 1 of Ah-hae.

[Equation 1]

$$e_i = y_i - (ax_i + b) = y_i - ax_i - b$$

$$S = \sum_{i=1}^{n} e_i^2 = \sum_{i=1}^{n} (y_i - ax_i - b)^2$$

At this time, the slope (*a*) and intercept (**b**) of the straight line must be calculated, and differentiation, a basic mathematical tool for obtaining the minimum error, is applied to obtain the slope and intercept.

Since *S,* which is the total sum of vertical deviations, is a multivariate function composed of the total sum of squares of individual vertical deviations *e$_i$*, two partial derivative functions such as Equations 2 and 3 below may be obtained by partial derivative of the total sum of vertical deviations S by *a* and *b,* respectively.

[Equation 2]

$$\frac{\partial S}{\partial a} = -2 \sum [(y_i - ax_i - b)x_i]$$

[Equation 3]

$$\frac{\partial S}{\partial b} = -2 \sum (y_i - ax_i - b)$$

When the total vertical deviation $S$ is differentiated (partial derivative) and the point at which the total vertical deviation $S$ is minimized (i.e., the point at which the derivative of $S$ is zero) is found, the point at which the error is minimized may be found, and this is a process of using the 'least square method'.

A derivation process for a point at which the value of the partial derivative function according to Equation 2 becomes zero is summarized as Equation 4 below.

[Equation 4]

$$\frac{\partial S}{\partial a} = -2 \sum [(y_i - ax_i - b)x_i]$$

$$\rightarrow 0 = -2 \sum [(y_i - ax_i - b)x_i]$$

$$\rightarrow 0 = \sum [(y_i - ax_i - b)x_i]$$

$$\rightarrow 0 = \sum (x_i y_i) - a \sum (x_i)^2 - b \sum x_i$$

$$\Rightarrow 0 = \sum (x_i y_i) - a \sum (x_i)^2 - b \sum x_i \ \left(\text{From } \frac{\delta S}{\delta a}\right)$$

In addition, a derivation process for a point at which the value of the partial derivative function according to Equation 3 becomes zero is summarized as Equation 5 below.

[Equation 5]

$$\frac{\partial S}{\partial b} = -2 \sum (y_i - ax_i - b)$$

$$\rightarrow 0 = -2 \sum (y_i - ax_i - b)$$

$$\rightarrow 0 = \sum (y_i - ax_i - b)$$

$$\rightarrow 0 = \sum y_i - a \sum x_i - nb$$

$$\Rightarrow 0 = \sum y_i - a \sum x_i - nb \ \left(\text{From } \frac{\delta S}{\delta b}\right)$$

The slope ($a$) and the intercept ($b$) of the straight line may be obtained based on Equations 4 and 5, and the slope ($a$) is obtained as in Equation 6 below, and the intercept ($b$) is obtained as in Equation 7.

[Equation 6]

$$a = \frac{n \sum (x_i y_i) - \sum x_i \sum y_i}{n \sum (x_i)^2 - (\sum x_i)^2}$$

[Equation 7]

$$b = \bar{y} - a \cdot \bar{x}$$

It is possible to obtain a reasonable linear function $y = ax + b$ representing the experimental data through the least squares method based on the slope ($a$) and intercept ($b$) according to Equations 6 and 7.

Therefore, in the case of the multi-axis force/torque sensor illustrated in FIG. 2, which is attached to the multi-axis force/torque sensor for sensor calibration, since a linear function may be obtained for each of the three force sensors located on three axes and the three torque sensors located on three axes, a total of six linear regression functions corresponding to the sensor values provided on each axis may be obtained.

Based on a total of six linear regression functions calculated in the process of step S100 through the above-described process, the process of step S200 stores the sensor output values $y_i$ of all axes after $x_i$ is applied to each axis tested in step S201, as shown in FIG. 6.

In step S202, the $x'_i$ value, which is an estimate of $x_i$, is generated and stored using the linear regression equation calculated in the process of step S100 from the output values $y_i$ of all axes.

When an $x'_i$ value, which is an estimate, is generated in step S202 for each axis of the multi-axis force/torque sensor, in step S203, a vector $X' = [x'_1, x'_2, x'_3, x'_4, x'_5, x'_6]$ of the estimate and a true value vector of the calibration value are defined as $Z = [x_1, x_2, x_3, x_4, x_5, x_6]$.

After that, in step S204, a matrix equation called $Z = RX' + P$ is constructed, where $R$ is the correlation coefficient $6 \times 6$ matrix and $P$ is the offset constant vector.

Therefore, in step S205, in order to complete the matrix equation constructed in step S204, $R$ and $P$ are calculated using various optimization functions including pseudo-inverse matrices.

In this case, briefly looking at the pseudo-inverse matrix, when the correlation equation is a matrix equation in the form of $Z = RX' + P$, it is necessary to derive the pseudo-inverse matrix to obtain $R$ and $P$. That is, when there are vectors $Z$ and $X'$, the purpose is to obtain $R$ and $P$ together.

Since each pair of data has vectors $Z$ and $X'$, if we define them as vectors $Z_j$ and $X'_j$ that match the data pair $j$, if there are $n$ pairs of data, there are vectors from $Z_1$ to $Z_n$ and from $X'_1$ to $X'_n$.

Therefore, this is summarized in Equation 8 below.

[Equation 8]

$$Z_1 = RX'_1 + P$$

$$Z_2 = RX'_2 + P$$

$$\cdots$$

$$Z_n = RX'_n + P$$

At this time, a new $\hat{X}$ is defined, and the new $\hat{X}$ is $[X', 1]$.

Therefore, when Equation 8 is redefined as a new $\hat{X}$, it may be summarized as $Z = [R\,P] * \hat{X} = U * \hat{X}$. In this case, $U = [R\,P]$ is defined.

Using this, a matrix as shown in Equation 9 below is defined.

[Equation 9]

$$T = [Z_1 Z_2 \cdots Z_n]$$

$$Q = \left[ \widehat{X_1} \widehat{X_2} \cdots \widehat{X_n} \right]$$

When the matrix as shown in Equation 9 is summarized, it may be finally defined as $T = U * Q$, where $T$ is a $6 \times n$ matrix and $Q$ is a $7 \times n$ matrix. $U$ is a $6 \times 7$ matrix.

Finally, by deriving the correlation coefficient $R$ and the correlation constant $P$, a solution as shown in Equation 10 below may be obtained.

[Equation 10]

$$U = TQ' \times (QQ')^{-1}$$

At this time, since $U = [R\ P]$ is defined, R is a 6 × 6 matrix and P is a 6 × 1 vector in the 6 × 7 matrix of $U$.

When the correlation coefficient R and the correlation constant $P$ are calculated through the above-described process, the calibration matrix formula $Z = RX' + P$ is completed through the process of step S206.

When the integrated sensor calibration is performed based on the calibration matrix calculated in the process of step S200 through the above-described process, the process of step S300 is performed, and as shown in FIG. 7, the vector $X' = [x'_1, x'_2, x'_3, x'_4, x'_3, x'_6]$ of the estimated value is calculated using the sensor output information of all axes measured in the process of step S301 and the linear regression equation.

Thereafter, in step S302, the integrated calibration matrix vector $Z = [x_1, x_2, x_3, x_4, x_5, x_6]$ is calculated from the calibration matrix equation $Z = RX' + P$ calculated in step S200.

Thereafter, in the process of step S303, determine reliability based on the integrated calibration value $Z = [x_1, x_2, x_3, x_4, x_5, x_6]$.

As described above, the multi-axis force/torque sensor is a sensor having a maximum of 6 axes of output freedom according to each axis and each torque direction in a three-dimensional space, and the calibration method for securing independence of output linearity of the multi-axis force/torque sensor according to the present invention is largely divided into two steps.

In the first step, linear calibration is performed on each axis using the verification test input value and the sensor output value. That is, the simplest method after performing the linear calibration is to obtain the $y_i = Ax_i + B$ (where the input is x and the outputs are y, $A$ and $B$ are linear coefficients) for the force and torque, and by using this, the y output during the actual test may be viewed, and the estimate of the input $x, x',$ may be obtained.

In the second step, the results are recorded by experimenting with what values the entire axis derives for the input of each axis. This experimental step is to record how the entire axis is affected for all axis inputs. When the entire experiment is completed, the input and output are expressed as equations using a correlation matrix.

The represented correlation matrix is arranged as $Z = RX'$.

Here, the estimated input vector $X'$ and the calibrated input estimation vector $Z$ are maximum six-dimensional vectors, and $R$ corresponds to a correlation matrix of maximum 6 × 6 that calibrates the correlation with each other. Various optimization methods may be used to estimate the correlation matrix, and simply, a pseudo inverse matrix method may be used, and various weight least squares method, LevenbergMarquardt matrix optimization and genetic algorithm, machine learning technique, and the like may be used.

Although the exemplary embodiments of the present invention have been illustrated and described above, the present invention is not limited to the specific embodiments described above, and various modifications can be made by a person having ordinary skill in the art to which the method belongs without departing from the gist of the present invention claimed in the claims, and such modifications should not be individually understood from the technical spirit or the prospect of the present invention.

**Claims**

1. A calibration method for a multi-axis force/torque sensor, which has up to $n$ axes and is configured such that $n/2$ of the axes measure force in a vertical direction and $n/2$ of the axes measure torque in a horizontal direction, the method comprising:

   a first step of preparing test reference data for the multi-axis force/torque sensor;
   a second step of obtaining sensor output values measured on the n axes of the multi-axis force/torque sensor by using the test reference data prepared in the first step as input values;
   a third step of calculating a linear relationship between the input values and the sensor output values on each axis for forces and torques by using the sensor output values obtained in the second step; and
   a fourth step of calculating input values corresponding to the sensor output values obtained in the second step based on the linear relationship calculated in the third step, and then calculating a correlation matrix equation according to correlations between respective axes by comparing the calculated input values with actual input values.

2. The calibration method of claim 1, further comprising a fifth process of determining reliability by calculating an integrated calibration value according to a matrix vector for integrated calibration of correlation between each axis based on the correlation matrix calculated through the fourth process.

3. The method of claim 1, wherein the third process generates n linear functions by using a linear regression method based on the minimization of square errors for each of the n axes.

4. The method of claim 3, wherein the function according to the linear relationship is a function of $y = ax + b$, x is an input value of force or torque applied to each axis, $y$ is an output value of each sensor according to the input value, a slope ($a$) is calculated by $a = \dfrac{n \sum (x_i y_i) - \sum x_i \sum y_i}{n \sum (x_i)^2 - (\sum x_i)^2}$ , and an intercept (b) is calculated by $b = \overline{y} - a \cdot \overline{x}$.

5. The method of claim 1, wherein the fourth step comprises:

   a first sub-step of storing sensor output values $y_i$ of all axes after applying $x_i$ to each axis under test;
   a second sub-step of generating and storing an estimated value $x'_i$ of $x_i$ by using a function based on the linear relationship calculated in the third step from all the sensor output values $y_i$ of the axes;
   a third sub-step of defining, when the estimated values $x'_i$ are generated for each axis of the multi-axis force/torque sensor through the second sub-step, an estimated value vector $X' = [x'_1, x'_2, \cdots x'_n]$ and a true value vector of calibration values $Z = [x_1, x_2, \cdots, x_n]$; and
   a fourth sub-step of implementing an integrated calibration matrix equation $Z = RX' + P$ based on the estimated value vector $X'$ and the true value vector $Z$ defined in the third sub-step.

6. The method of claim 5, wherein when the integrated calibration matrix is a $Z = RX' + P$-type matrix, when Z and $X'$ vectors existing in each pair of data are defined as vectors $Z_j$ and $X'_j$ matching the data pair $j$, the method comprises:

   a first step in which if there are $n$ data pairs, $Z_1$ to $Z_n$ and $X'_1$ to $X'_n$ vectors exist, and if $[X', 1]$ is newly defined as $\hat{X}$ to arrange the integrated calibration matrix $Z = RX' + P$ as $Z = [R\ P] * \hat{X} = U * \hat{X}$;
   a second step in which if reorganizing the calibration matrix equation obtained in the first step such that the matrices of $Z_1$ through $Z_n$ and the newly defined $\hat{X}$ are arranged as $T = [Z_1, Z_2 \cdots Z_n]$ and $Q = \left[\widehat{X_1}, \widehat{X_2} \cdots \widehat{X_n}\right]$, and finally converting it into $T = U * Q$; and
   a third step in which the calibration matrix equation converted in the second step, defining and arranging $U = [R\ P]$, and obtaining the correlation coefficient R and the correlation constant $P$ through the relation $U = TQ' \times (QQ')^{-1}$.

7. The method of claim 2, wherein the fifth step further comprises:

   a first sub-step of calculating a vector $X' = [x'_1, x'_2, \cdots, x'_n]$ of an estimated value by using sensor output information generated from all measured axes of the multi-axis force/torque sensor and a linear regression function calculated through the third step;
   a second sub-step of calculating an integrated calibration matrix vector $Z = [x_1, x_2, \cdots, x_n]$ from a calibration matrix equation $Z = RX' + P$ calculated through the fourth step based on the vector $X' = [x'_1, x'_2, \cdots, x'_n]$ of the estimated value calculated through the first step; and
   a third step of determining whether the multi-axis force/torque sensor is reliable to be calibrated based on the integrated calibration value $Z = [x_1, x_2, \cdots, x_n]$ calculated through the second step.

8. The sensor calibration apparatus for a multi-axis force/torque sensor having a maximum of n axes, and configured to measure a force in a vertical direction on the $n/2$ axes, and to measure a torque in a horizontal direction on the $n/2$ axes, the sensor calibration apparatus comprising:

   a reference data DB for testing for storing data for testing the multi-axis force/torque sensor;
   a test pressurization unit for applying a force or a torque to each axis of the multi-axis force/torque sensor in response to a data value provided from the reference data DB for testing;
   a multi-axis sensor value detection and storage unit for individually detecting and storing a sensor value output from the multi-axis force/torque sensor according to a force or a torque applied by the test pressurization unit for each axis;
   a multi-axis linear function generation unit for calculating a linear relationship between an input value and a sensor value on each axis for a force and a torque by using the sensor values stored in the multi-axis linear function generation unit; and
   an inter-axis correlation matrix generation unit configured to calculate a correlation matrix according to correlations between respective axes by calculating input values corresponding to sensor output values obtained through the multi-axis sensor value detection and storage unit on the basis of the linear functions generated by the multi-axis linear function generation unit, and then comparing the calculated input values with actual input values generated from the test reference data DB.

9. The apparatus of claim 8, further comprising an inter-axis correlation matrix reliability test unit configured to determine reliability by calculating an integrated calibration value according to a matrix vector for integrating and calibrating correlations between respective axes based on the correlation matrix calculated through the inter-axis correlation matrix generation unit.

10. The apparatus of claim 8, wherein the multi-axis linear function generation unit generates n linear functions for each of the n axes using a linear regression method based on the minimization of a square error; the function according to the linear relationship is a function of $y = ax + b$;
x is an input value of force or torque applied to each axis, y is an output value of each sensor according to the input value, a slope ($a$) is calculated by $a = \dfrac{n\sum(x_i y_i) - \sum x_i \sum y_i}{n\sum(x_i)^2 - (\sum x_i)^2}$, and the intercept (b) is calculated by $b = \bar{y} - a \cdot \bar{x}$.

11. The inter-axis correlation matrix generator of claim 10, wherein the inter-axis correlation matrix generator stores sensor output values $y_i$ of all axes after $x_i$ is applied to each axis under test; generates and stores an estimated value $x'_i$ of $x_i$ by using a function according to the linear relationship calculated in the third process from the output values $y_i$ of all axes; defines, when the estimated values $x'_i$ are generated for each axis of the multi-axis force/torque sensor through the second step, an estimated value vector $X' = [x'_1, x'_2, \cdots x'_n]$ and a true value vector $Z = [x_1, x_2, \cdots, x_n]$ of calibration values; and implements an integrated calibration matrix equation $Z = RX' + P$ based on the defined estimated value vector $X'$ and the true value vector $Z$, in an apparatus for calibrating the multi-axis force/torque sensor.

12. The calibration apparatus of claim 11, wherein, when the integrated calibration matrix is in the form of $Z = RX' + P$, and the vectors $Z$ and $X'$ in each data pair are defined as $Z_j$ and $X'_j$ corresponding to the data pair $j$, then, if $n$ data pairs exist, the vectors $Z_1$ through $Z_n$ and $X'_1$ through $X'_n$ exist, and $[X', 1]$ is newly defined as $\hat{X}$ so as to rearrange the integrated calibration matrix $Z = RX' + P$ into $Z = [R\ P] * \hat{X} = U * \hat{X}$; wherein, the calibration matrix arranged in the first step is reorganized such that the matrices of $Z_1$ through $Z_n$ and the newly defined $\hat{X}$ are expressed as $T = [Z_1, Z_2 \cdots Z_n]$ and

$$Q = \left[\widehat{X_1}, \widehat{X_2} \cdots \widehat{X_n}\right]$$

, and finally converted into $T = U * Q$; and wherein, in the calibration matrix converted in the second step, $U$ is defined as $[R\ P]$, and the correlation coefficient R and the correlation constant $P$ are obtained according to the relation $U = TQ' \times (QQ')^{-1}$.

13. The calibration apparatus of claim 9, wherein the inter-axis correlation matrix reliability test unit calculates a vector $X' = [x'_1, x'_2, \cdots, x'_n]$ of an estimated value using sensor output information generated from all measured axes of the multi-axis force/torque sensor and a linear regression function calculated through the third process, calculates an integrated calibration matrix vector $Z = [x_1, x_2, \cdots, x_n]$ from the calibration matrix $Z = RX' + P$ based on the calculated vector $X' = [x'_1, x'_2, \cdots, x'_n]$ of the estimated value, and determines whether the multi-axis force/torque sensor is calibrated and reliable based on the calculated integrated calibration value $Z = [x_1, x_2, \cdots, x_n]$.

[FIG. 1]

[FIG. 2]

[FIG. 3]

30

Pressurization
part for test

20

DB Baseline Data
for Testing DB

40

First-axis
sensor value
detection unit

Second-axis
sensor value
detection unit

⋮

n-th axis
sensor value
detection unit

10

Multi-axis force/
torque sensor

50

First-axis
linear function
generation unit

Second-axis
linear function
generation unit

⋮

n-th axis
linear function
generation unit

60

Inter-axis
correlation
matrix
generation unit

70

Inter-axis
correlation matrix
reliability
checking unit

[FIG. 4]

Sensor calibration start

Baseline Data for Testing

Calibration of individual axis sensors using linear regression for each axis of the sensor — S100

Calculate correlation matrix for all axes of the sensor to calibrate correlation integration between each axis — S200

Verification Data after Sensor Integration Calibration — S300

Sensor calibration end

[FIG. 5]

$d_i = y_i - (ax_i + b)$

[FIG. 6]

```
              ┌──────────┐
              │  Start   │───── S200
              └──────────┘
                   │
                   ▼
┌─────────────────────────────────────────────────┐
│  Store sensor output $y_i$ of all axes after $x_i$ is applied │───── S201
│            to each axis being tested             │
└─────────────────────────────────────────────────┘
                   │
                   ▼
┌─────────────────────────────────────────────────────────┐
│  Generate and store the $x'_i$ value, which is an estimate of $x_i$, │───── S202
│  using a linear regression equation from the output values $y_i$ of all axes │
└─────────────────────────────────────────────────────────┘
                   │
                   ▼
┌─────────────────────────────────────────────────┐
│  vector of estimates $X'=[x'_1, x'_2, ... , x'_n]$ and │───── S203
│  the true value vector $Z=[x_1, x_2, ... , x_n]$ defined │
└─────────────────────────────────────────────────┘
                   │
                   ▼
┌─────────────────────────────────────────────────┐
│      Construct a matrix equation called $Z=RX'+P$      │───── S204
└─────────────────────────────────────────────────┘
                   │
                   ▼
┌─────────────────────────────────────────────────┐
│  Calculate R and P through an optimization function according │───── S205
│            to a pseudo-inverse matrix            │
└─────────────────────────────────────────────────┘
                   │
                   ▼
┌─────────────────────────────────────────────────┐
│  Complete the calibration matrix equation $Z=RX'+P$ using │───── S206
│            the calculated R and P                │
└─────────────────────────────────────────────────┘
                   │
                   ▼
              ┌──────────┐
              │   End    │
              └──────────┘
```

[FIG. 7]

Start — S300

Calculate the vector $X'=[\,x'_1, x'_2, \ldots, x'_n\,]$ of the estimated value using the sensor output information of all measured axes and the linear regression equation — S301

Calculate the integrated calibration matrix vector $Z=[\,x_1, x_2, \ldots, x_n\,]$ from $Z=RX'+P$ — S302

Reliability Read Based on Integrated Calibration Values $x_1, x_2, \ldots, x_n$ — S303

End

## INTERNATIONAL SEARCH REPORT

| International application No. |
|---|
| **PCT/KR2024/095234** |

| A. | CLASSIFICATION OF SUBJECT MATTER |
|---|---|

**G01L 25/00**(2006.01)i; **G01L 5/16**(2006.01)i; **G01L 5/00**(2006.01)i; **G06F 17/10**(2006.01)i

According to International Patent Classification (IPC) or to both national classification and IPC

| B. | FIELDS SEARCHED |
|---|---|

Minimum documentation searched (classification system followed by classification symbols)

G01L 25/00(2006.01); B25J 19/02(2006.01); G01L 27/00(2006.01); G01L 5/00(2006.01); G01L 5/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 보정(calibration), 토크(torque), 힘(force), 센서(sensor), 함수(function), 행렬 (matrix), 벡터(vector), 비교(comparison), 축(axis), 선형회귀법(linear regression), 최소자승법(at least square method)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2017-0099020 A (RESEARCH & BUSINESS FOUNDATION SUNGKYUNKWAN UNIVERSITY) 31 August 2017 (2017-08-31) See paragraphs [0019], [0036] and [0056]-[0069] and claims 1-5 and 12-13. | 1,3-5,8,10 |
| A | | 2,6-7,9,11-13 |
| A | KR 10-2022-0051753 A (KOREA INSTITUTE OF SCIENCE AND TECHNOLOGY) 26 April 2022 (2022-04-26) See claims 1-3 and figures 5-7. | 1-13 |
| A | KR 10-2017-0071644 A (RESEARCH & BUSINESS FOUNDATION SUNGKYUNKWAN UNIVERSITY) 26 June 2017 (2017-06-26) See paragraphs [0023]-[0046] and figure 3. | 1-13 |
| A | JP 2012-176465 A (UNIV OF TOKYO et al.) 13 September 2012 (2012-09-13) See paragraphs [0021]-[0051] and figures 1-2. | 1-13 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 May 2024** | **20 May 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2024/095234** |

### C.    DOCUMENTS CONSIDERED TO BE RELEVANT

| Category* | Citation of document, with indication, where appropriate, of the relevant passages | Relevant to claim No. |
|---|---|---|
| A | US 2019-0078951 A1 (BERTEC LIMITED) 14 March 2019 (2019-03-14) <br> See claims 1-8 and figures 72-74. | 1-13 |

Form PCT/ISA/210 (second sheet) (July 2022)

**INTERNATIONAL SEARCH REPORT**
Information on patent family members

| International application No. |
|---|
| **PCT/KR2024/095234** |

| Patent document cited in search report | | | Publication date (day/month/year) | Patent family member(s) | | | Publication date (day/month/year) |
|---|---|---|---|---|---|---|---|
| KR | 10-2017-0099020 | A | 31 August 2017 | KR | 10-1808936 | B1 | 14 December 2017 |
| KR | 10-2022-0051753 | A | 26 April 2022 | KR | 10-2521697 | B1 | 17 April 2023 |
| | | | | US | 11442118 | B2 | 13 September 2022 |
| | | | | US | 2022-0120827 | A1 | 21 April 2022 |
| KR | 10-2017-0071644 | A | 26 June 2017 | KR | 10-1818312 | B1 | 15 January 2018 |
| JP | 2012-176465 | A | 13 September 2012 | JP | 5730614 | B2 | 10 June 2015 |
| US | 2019-0078951 | A1 | 14 March 2019 | GB | 2538631 | A | 23 November 2016 |
| | | | | GB | 2538631 | B | 21 February 2018 |
| | | | | US | 10126186 | B2 | 13 November 2018 |
| | | | | US | 10527508 | B2 | 07 January 2020 |
| | | | | US | 10765936 | B2 | 08 September 2020 |
| | | | | US | 11054325 | B2 | 06 July 2021 |
| | | | | US | 11262258 | B2 | 01 March 2022 |
| | | | | US | 11604106 | B2 | 14 March 2023 |
| | | | | US | 11850078 | B1 | 26 December 2023 |
| | | | | US | 11911147 | B1 | 27 February 2024 |
| | | | | US | 2015-0096387 | A1 | 09 April 2015 |
| | | | | US | 2016-0245711 | A1 | 25 August 2016 |
| | | | | US | 2016-0334288 | A1 | 17 November 2016 |
| | | | | US | 2018-0024015 | A1 | 25 January 2018 |
| | | | | US | 2020-0139229 | A1 | 07 May 2020 |
| | | | | US | 2020-0408625 | A1 | 31 December 2020 |
| | | | | US | 2021-0333163 | A1 | 28 October 2021 |
| | | | | US | 2022-0178775 | A1 | 09 June 2022 |
| | | | | US | 9032817 | B2 | 19 May 2015 |
| | | | | US | 9404823 | B1 | 02 August 2016 |
| | | | | US | 9778119 | B2 | 03 October 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101470160
- WO 1020080039624 A
- WO 101470160 A